# EUROPÄISCHE PATENTSCHRIFT

(11) **EP 0 638 461 B1**
(45) Veröffentlichungstag und Bekanntmachung des Hinweises auf die Patenterteilung: **13.01.1999**
(21) Anmeldenummer: 94108815.5
(22) Anmeldetag: 08.06.1994
(51) Int. Cl.: B60R 1/02, C03C 17/38

(54) **Spiegel, insbesondere Fahrzeugrückblickspiegel**
Mirror, in particular rearview mirror for a vehicle
Miroir, en particulier miroir pour rétroviseur de véhicule

(30) Priorität: 27.07.1993 DE 4325124
(43) Veröffentlichungstag der Anmeldung: 15.02.1995
(73) Patentinhaber: Bayerische Motoren Werke Aktiengesellschaft, 80788 München (DE); Piringer, Helmut, 85598 Baldham (DE)
(72) Erfinder: Meyr, Wolfgang, D-80638 München (DE); Piringer, Helmut, D-85598 Baldham (DE)
(74) Vertreter: Dexheimer, Rolf

(56) Entgegenhaltungen:
- DE-A- 3 205 055
- GB-A- 2 205 075
- US-A- 4 110 390
- US-A- 4 408 021
- PATENT ABSTRACTS OF JAPAN vol. 13, no. 90 (M-803) 2. März 1989 & JP-A-63 284 048 (SAN RAIZU KOGYO K.K.) 21. November 1988
- PATENT ABSTRACTS OF JAPAN vol. 16, no. 167 (P-1342) 22. April 1992 & JP-A-04 014 642 (SEKISUI CHEM CO LTD) 20. Januar 1992
- PATENT ABSTRACTS OF JAPAN vol. 3, no. 135 (E-150) 10. November 1979 & JP-A-54 112 658 (SEIKO EPSON CORP.) 3. September 1979
- PATENT ABSTRACTS OF JAPAN vol. 10, no. 271 (P-497) 16. September 1986 & JP-A-61 093 431 (SHARP CORP.) 12. Mai 1986
- PATENT ABSTRACTS OF JAPAN vol. 14, no. 247 (M-0978) 25. Mai 1990 & JP-A-02 068 238 (ASAHI GLASS CO LTD) 7. März 1990

## Beschreibung

Die Erfindung betrifft einen Spiegel, insbesondere Fahrzeug-Rückblickspiegel, mit den im Oberbegriff des Patentanspruches 1 angegebenen Merkmalen.

Ein derartiger Spiegel ist in der JP-A-56128901 angegeben, der als Haftschicht ein Silikon-Harz verwendet, das keine oder lediglich eine geringe Elastizität aufweist. Das Silikon-Harz ist stark verfärbt und nur wenig durchsichtig. Es weist somit keine solche optische Güte auf, daß diese Schicht im Strahlengang eines Spiegels angeordnet werden könnte. Das Silikon-Harz bildet lediglich eine einzige Komponente. Die wesentliche Eigenschaft des Silikon-Harzes ist seine Hitzebeständigkeit. In dieser Schrift sind weitere hitzebeständige Harze (Phenolharz, Epoxydharz) angegeben, die anstelle des Silikon-Harzes verwendbar sind, so daß dem Silikon-Harz keine herausragende Bedeutung zukommt.

In der DE 38 25 164 A1 ist ein beheizbarer Fahrzeug-Außenspiegel beschrieben, der eine Spiegelplatte aufweist, auf die eine Reflexionsschicht aufgebracht und die dem Spiegelbetrachter zugewandte Fläche durch eine Glasscheibe gebildet ist. Der Spiegelträger ist über Elektroanschlüsse beheizbar. Um einen flächigen Stromfluß innerhalb der Spiegelplatte zu bewirken, sind an den Seiten des Spiegelträgers mit den Elektroanschlüssen verbundene Kontaktstreifen vorgesehen. Besonders nachteilig ist, daß die Glasscheibe eine verhältnismäßig große Dicke aufweist, wodurch beim Aufheizen des Spiegels bis zum Auflösen von Niederschlägen auf der Spiegeloberfläche eine hohe Energiezufuhr erforderlich ist. Die Dicke der Glasscheibe kann nicht vermindert werden, da aufgrund der unterschiedlichen Wärmeausdehnungskoeffizienten Spannungen in der Glasscheibe verursacht werden, die bei einer dünnen Ausbildung der Glasscheibe diese zerstören oder die optischen Eigenschaften des Spiegels beeinträchtigen würden. In einer Variante ist die Reflexionsschicht auf den Spiegelträger aufgebracht und anstelle der Glasscheibe eine kratz- und witterungsfeste Beschichtung auf der Reflexionsschicht vorgesehen. Diese Ausführung hat den Nachteil, daß die dünne kratz- und witterungsfeste Beschichtung Interferenzerscheinungen des auftreffenden Lichts in der Spiegelbetrachtungsfläche verursachen kann, die sich in störenden Farbsäumen im Spiegelbild bemerkbar machen.

Der Erfindung liegt die Aufgabe zugrunde, einen Spiegel nach dem Oberbegriff des Patentanspruches 1 anzugeben, der für die auf die Spiegelplatte aufgebrachten Schichten bzw. für die Spiegelplatte die Verwendung von Materialien ermöglicht, die zumindest teilweise sehr unterschiedliche Wärmeausdehnungskoeffizienten aufweisen. Darüber hinaus soll auch bei einem beheizbaren Spiegel die Verwendung einer dünnen Glasschicht als kratzfeste Schutzschicht auf der dem Spiegelbetrachter zugewandten Spiegelseite möglich sein.

Diese Aufgabe ist durch die im Patentanspruch 1 angegebenen Merkmale gelöst. Vorteilhafte Ausgestaltungen der Erfindung sind den Unteransprüchen entnehmbar.

Besonders vorteilhaft ist, daß die Haftschicht aus einem Silikon-Gel einerseits die beiden daran angrenzenden Schichten verbindet und wenn diese Schichten sehr unterschiedliche Wärmeausdehnungskoeffizienten aufweisen, durch seine Elastizität überhöhte Spannungen in diesen Schichten verhindert. Die Haftschicht aus einem Silikon-Gel ermöglicht somit die Verwendung von bisher nicht für den Schichtaufbau eines Spiegels geeigneten Materialien bzw. von Materialien, die aufgrund der zu erwartenden Wärmespannungen bisher nur mit größeren Mindestdicken verwendet wurden. Das Silikon-Gel ermöglicht beispielsweise die Verwendung einer dünnen Glasschicht als kratz- und witterungsfeste Schutzschicht auf der dem Spiegelbetrachter zugewandten Spiegeloberfläche. Während bei dem Stand der Technik die eine Schutzschicht bildende Glasscheibe etwa eine Dicke von 2 mm aufweist, kann durch die Verwendung einer Haftschicht aus Silikon-Gel die Dicke einer derartigen Glasscheibe wesentlich vermindert und beispielsweise bis auf etwa 0,04 mm herabgesetzt sein. Eine in der Dicke verminderte Glasscheibe als Schutzschicht hat den wesentlichen Vorteil, daß für das Aufheizen des Spiegels bis zum Verflüchtigen von Niederschlägen auf der Spiegeloberfläche eine wesentlich geringere Energiezufuhr erforderlich ist. Auch bei Verwendung einer anderen Schutzschicht auf der dem Spiegelbetrachter zugewandten Spiegelseite , beispielsweise einer Kunststoff- oder Lackfolie, können die einzelnen Schichten zumindest teilweise einen sehr unterschiedlichen Wärmeausdehnungskoeffizienten aufweisen, da bei von der Sonne oder von einer Heizeinrichtung aufgeheiztem Spiegel die Haftschicht aus einem Silikon-Gel übermäßige Wärmespannungen in den einzelnen Schichten bzw. im Spiegelträger verhindert. Diese Wärmespannungen in den Spiegelschichen und/oder in der Spiegelplatte ausgleichende Wirkung der Haftschicht aus einem Silikon-Gel ist unabhängig davon vorhanden, ob das Silikon-Gel zwischen der Spiegelplatte und der Reflexionsschicht und/oder zwischen der Reflexionsschicht und der kratzfesten Schutzschicht angeordnet ist. Ist die dem Spiegelbetrachter zugewandte Schutzschicht durch eine dünne Glasscheibe gebildet, so kann diese flächig verklebt werden, ohne daß das Glas unter den auftretenden Wärmespannungen bricht oder die optischen Eigenschaften des Spiegels verschlechtert werden. Das Silikon-Gel ist an sich bekannt und beispielsweise als SilGel 612 von der Firma Wacker-Chemie zu beziehen. Dieses SilGel 612 ist ein Zwei-Komponenten-Silikonkautschuk, der gelartig vulkanisiert. Bisher ist dieses Silikon-Gel zur Verwendung als transparenter Verguß von elektrischen und elektronischen Bauteilen, Abdichtungen von Reinraumfiltern, transparente Verklebungen, Herstellen von Klebebändern, Einbettung von Glasfasern und für die Herstellung von Stoßdämpfern als geeignet herausgestellt. Die erfindungsgemäße Verwendung des Silion-Gels für den Schichtaufbau eines Spiegels, die eine Verwendung von Materialien mit sehr unterschiedlichen Wärmeausdehnungskoeffizienten ermöglicht, ist bisher nicht bekannt.

Zwei Ausführungsbeispiele der Erfindung werden anhand einer Zeichnung näher erläutert. Es zeigen
- Fig. 1: ein erstes Ausführungsbeispiel mit einer zwischen der Spiegelplatte und der Reflexionsschicht vorgesehenen Haftschicht aus einem Silikon-Gel und
- Fig. 2: ein zweites Ausführungsbeispiel mit einer zwischen der Reflexionsschicht und der kratzfesten Schutzschicht vorgesehenen Haftschicht aus einem Silikon-Gel.

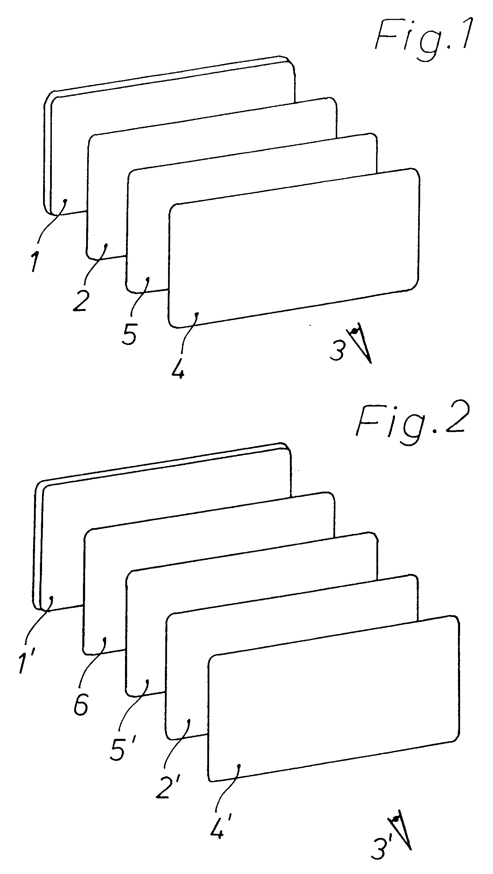

Der in Fig. 1 gemäß einem ersten Ausführungsbeispiel vorgesehene Spiegel ist ein Teil eines Fahrzeug-Rückblickspiegels, der in üblicher Weise ein nicht dargestelltes Spiegelgehäuse und einen verstellbaren Spiegelhalter aufweist, mit dem der in der Figur dargestellte Spiegel zu verbinden ist. Der in seinem grundsätzlichen Aufbau vereinfacht dargestellte Spiegel weist eine Spiegelplatte 1 auf, die bei dem Ausführungsbeispiel aus einem thermoplastischen Material, beispielsweise Polyphenylensulfid (PPS) gefertigt ist. Dieses Material ermöglicht ein konduktives Aufheizen der Spiegelplatte 1 über nicht dargestellte Stromanschlüsse einer ebenfalls nicht dargestellten Stromquelle. Auf die Spiegelplatte 1 ist eine Haftschicht 2 aus einem Silikon-Gel aufgebracht, das beispielsweise dem bei der Firma Wacker-Chemie erhältlichen SilGel 612 entspricht. Auf der dem Spiegelbetrachter 3 abgewandten Rückseite einer vorderen Schutzschicht 4 ist eine Reflexionsschicht 5 aufgebracht und über die Haftschicht 2 mit der Spiegelplatte 1 verbunden. Die dem Spiegelbetrachter 3 abgewandte Rückseite der Schutzschicht 4 bildet eine optische, beispielsweise polierte Oberfläche für die Reflexionsschicht 5. Bei der vorliegenden Ausführung ist die Reflexionsschicht 5 im wesentlichen entweder aus Cr, Al oder TiO₂ gebildet. Die Schutzschicht 4 ist eine dünne Spiegelglasscheibe, die gegenüber dem bekannten Fahrzeug-Außenspiegel mit einer Glasscheibe als Schutzschicht eine wesentlich geringere Dicke beispielsweise von 0,04 mm bis 1,5 mm aufweist. Die Schutzschicht 4 aus einer dünnen, durchsichtigen Glasscheibe sollte wenigstens eine solche Dicke aufweisen, daß in der Spiegelbetrachtungsfläche Interferenzerscheinungen des auftreffenden Lichts nicht bemerkbar sind oder nicht auftreten. Die Haftschicht 2 aus einem Silikon-Gel wirkt nicht nur als Verbindungsmedium für die beiden angrenzenden Schichten, sondern bewirkt auch eine elektrische Isolierung der Reflexionsschicht 5 und der Schutzschicht 4 gegenüber der Spiegelplatte 1. Die Haftschicht 2 aus einem Silikon-Gel gleicht außerdem Wärmespannungen der Spiegelplatte 1, der Schutzschicht 4 und/oder der Reflexionsschicht 5 aus, wodurch die durch eine dünne Glasscheibe gebildete Schutzschicht 4 bei den auftretenden Wärmespannungen nicht bricht und die optischen Eigenschaften des Spiegels auch bei sehr unterschiedlichen Wärmeausdehnungskoeffizienten der Spiegelplatte 1, der Reflexionsschicht 5 und der Schutzschicht 4 erhalten bleiben. Durch die Schutzschicht 4 aus einer dünnen Glasscheibe ist der Energieaufwand für das Beheizen der Spiegelplatte 1 und der Schutzschicht 4 wesentlich vermindert. Die Schutzschicht 4 aus einer dünnen Glasscheibe ist gegenüber den üblichen Schutzschichten von Spiegeln aus einem anderen Material wesentlich kratzfester und witterungsbeständiger. Beispielsweise im Winterfahrbetrieb kann die dem Spiegelbetrachter 3 zugewandte Spiegeloberfläche mit einem ein Buntmetall als Schaber aufweisenden Eiskratzer gereinigt werden, ohne daß zu befürchten ist, daß die Spiegeloberfläche verkratzt oder beschädigt wird.

Das zweite Ausführungsbeispiel gemäß Fig. 2 weist einen gegenüber dem Ausführungsbeispiel gemäß Fig. 1 geänderten Spiegelaufbau auf. Bei dieser Ausführung ist auf die beispielsweise konduktiv beheizbare Spiegelplatte 1' eine elektrische Isolierschicht 6 aufgebracht, die bei dem Ausführungsbeispiel durch eine transparente oder nicht transparente Schicht beispielsweise aus einem Polysiloxanlack gebildet ist. Bei dieser Ausführung weist die der elektrischen Isolierschicht 6 zugewandte Oberfläche der Spiegelplatte 1' eine optische, beispielsweise polierte Fläche auf. Auf die elektrische Isolierschicht 6 ist eine Reflexionsschicht 5' aufgebracht, die wie bei dem Ausführungsbeispiel gemäß Fig. 1 aus Cr, Al bzw. TiO₂ besteht. Auch bei dieser Ausführung ist die dem Spiegelbetrachter 3' zugewandte Spiegeloberfläche durch eine Schutzschicht 4' aus einer dünnen Glasscheibe gebildet. Diese dünne Glasscheibe ist über eine Haftschicht 2' im wesentlichen aus einem Silikon-Gel mit der Reflexionsschicht 5' verbunden. Bei dieser Ausführung wirkt die Haftschicht 2' auch als eine optische Abstandsschicht, die in der Spiegelbetrachtungsfläche Interferenzerscheinungen des auftreffenden Lichts vermeidet. Darüber hinaus gleicht die Haftschicht 2' aus einem Silikon-Gel Spannungen aufgrund von unterschiedlichen Wärmeausdehnungen der Schutzschicht 4', der Reflexionsschicht 5', der elektrischen Schicht 6 und/oder der Spiegelplatte 1' aus. Ein Springen der die Schutzschicht 4' bildenden dünnen Glasscheibe ist bei in den Sommermonaten von der Sonne aufgeheiztem Spiegel und beim Aufheizen der Spiegelplatte 1' und der anderen Schichten einschließlich der Schutzschicht 4' über die nicht dargestellte Heizeinrichtung nicht zu befürchten.

Die Erfindung wurde anhand von zwei Ausführungsbeispielen erläutert, auf die der Erfindungsgegenstand keineswegs eingeschränkt ist. Es sind auch andere Ausführungen möglich, ohne den Erfindungsgedanken aufzugeben. Die vorzugsweise aus Polyphenylensulfid gebildete Spiegelplatte kann auch aus einem anderen Material bestehen, beispielsweise wenn der Spiegel nicht oder nicht konduktiv beheizbar sein soll. Die bei den Ausführungsbeispielen durch eine dünne Glasscheibe gebildete Schutzschicht kann auch aus einem anderen durchsichtigen Material beispielsweise einem anorganischen Werkstoff wie eine Dünnglasfolie oder einem organischen Werkstoff wie eine kratzfest beschichtete Kunststoff- oder Lackfolie gebildet sein. Unabhängig davon, ob die Schutzschicht aus einer dünnen Glasschicht oder einem anderen Material gebildet ist, werden durch unterschiedliche Wärmeausdehnungskoeffizienten verursachte Spannungen in der Spiegelplatte und/oder in den Spiegelschichten auch dann von der Schutzschicht aus einem Silikon-Gel ausgeglichen, wenn diese Haftschicht nur zwischen der Spiegelplatte und der Reflexionsschicht oder zwischen der Reflexionsschicht und der kratzfesten Schutzschicht oder sowohl zwischen der Spiegelplatte und der Reflexionsschicht und zwischen der Reflexionsschicht und der kratzfesten Schutzschicht angeordnet ist. Die Reflexionsschicht kann auch durch ein von den Ausführungsbeispielen abweichendes Material gebildet sein. Die Spiegelplatte ist vorzugsweise aus einem thermoplastischen Material gefertigt. Ebenso ist auch ein Material auf duroplastischer Basis geeignet.

## Patentansprüche

1. Spiegel mit einer Spiegelplatte (1, 1'), die mit einer Reflexionsschicht (5, 5') und auf der dem Spiegelbetrachter (3, 3') zugewandten Fläche mit einer kratzfesten Schutzschicht (4, 4') versehen ist, wobei zwischen der Spiegelplatte (1) und der Reflexionsschicht (5) und/oder zwischen der Reflexionsschicht (5') und der kratzfesten Schutzschicht (4') eine Haftschicht (2, 2') mit Silikon angeordnet ist,
dadurch gekennzeichnet, daß die Haftschicht (2, 2') im wesentlichen ein gelartig vulkanisierendes Silikon-Gel aus einem Zwei-Komponenten-Silikonkautschuk ist.

2. Spiegel nach Anspruch 1, dadurch gekennzeichnet, daß die Spiegelplatte im wesentlichen aus einem duroplastischen oder vorzugsweise aus einem thermoplastischen Material besteht, das elektrisch leitend ist.

3. Spiegel nach Anspruch 2, dadurch gekennzeichnet, daß die Spiegelplatte (1, 1') im wesentlichen aus dem Material Polyphenylensulfid (PPS) gefertigt ist.

4. Spiegel nach einem der Ansprüche 1 bis 3, dadurch gekennzeichnet, daß die Spiegelplatte (1, 1') über eine Heizeinrichtung vorzugsweise konduktiv erwärmbar ist.

5. Spiegel nach einem der Ansprüche 1 bis 4, dadurch gekennzeichnet, daß die Reflexionsschicht (5) auf die dem Spiegelbetrachter (3) abgewandte Rückseite der kratzfesten Schutzschicht (4) aufgebracht ist und diese Rückseite eine optische, beispielsweise polierte Fläche bildet.

6. Spiegel nach einem der Ansprüche 1 bis 4, dadurch gekennzeichnet, daß zwischen der Reflexionsschicht (5') und der kratzfesten Schutzschicht (4') die Haftschicht (2') aus einem Silikon-Gel angeordnet ist und sich zwischen der Spiegelplatte (1') und der Reflexionsschicht (5') eine elektrische Isolierschicht (6) befindet.

7. Spiegel nach Anspruch 6, dadurch gekennzeichnet, daß die elektrische Isolierschicht (6) ein Lackfilm oder eine weitere Haftschicht im wesentlichen aus einem Silikon-Gel ist.

8. Spiegel nach einem der Ansprüche 1 bis 7, dadurch gekennzeichnet, daß die Reflexionsschicht (5, 5') im wesentlichen aus dem Material Cr, Al oder TiO₂ besteht.

9. Spiegel nach einem der Ansprüche 1 bis 8, dadurch gekennzeichnet, daß die kratzfeste Schutzschicht (4) eine durchsichtige Schicht aus einem anorganischen Werkstoff, beispielsweise einem Dünnglas bzw. einer Dünnglasfolie, oder einem organischen Werkstoff, beispielsweise eine kratzfest beschichtete durchsichtige Kunststoff- oder Lackfolie gebildet ist.

## Claims

1. A mirror comprising a mirror plate (1, 1') provided with a reflecting layer (5, 5') and with a scratch-proof protective layer (4, 4') on the surface facing the observer (3, 3'), a silicone adhesive layer (2, 2') being disposed between the mirror plate (1) and the reflecting layer (5), and/or between the reflecting layer (5') and the scratch-proof protective layer (4'),
characterised in that the adhesive layer (2, 2') is substantially a gel-like vulcanised silicone gel made from a two-component silicone rubber.

2. A mirror according to claim 1, characterised in that the mirror plate is substantially of thermoset plastics material or preferably thermoplastic material, which is electrically conductive.

3. A mirror according to claim 2, characterised in that the mirror plate (1, 1') is made substantially from polyphenylene sulphide (PPF).

4. A mirror according to any of claims 1 to 3, characterised in that the mirror plate (1, 1') is heatable, preferably by conduction, by a heating device.

5. A mirror according to any of claims 1 to 4, characterised in that the reflecting layer (5) is applied to the back of the scratch-proof protective layer (4) remote from the observer (3), and the said back is an optical surface, e.g. polished.

6. A mirror according to any of claims 1 to 4, characterised in that the silicone gel adhesive layer (2') is disposed between the reflecting layer (5') and the scratch-proof protective layer (4'), and an electrically insulating layer (6) is disposed between the mirror plate (1') and the reflecting layer (5').

7. A mirror according to claim 6, characterised in that the electric insulating layer (6) is a lacquer film or another adhesive layer made substantially of silicone gel.

8. A mirror according to any of claims 1 to 7, characterised in that the reflecting layer (5, 5') is substantially made of Cr, Al or TiO₂.

9. A mirror according to any of claims 1 to 8, characterised in that the scratch-proof protective layer (4) is a translucent layer of an inorganic material, e.g. a thin glass or a thin-glass sheet, or an organic material such as a scratch-proof coated

## Revendications

1. Miroir comportant une embase (1, 1') dont la surface en regard de l'observateur porte une couche réfléchissante (5, 5') ainsi qu'une couche de protection (4, 4') résistant aux rayures, une couche adhésive (2, 2') au silicone était interposée entre l'embase (1) et la couche réfléchissante (5) et/ou entre la couche réfléchissante (5') et la couche de protection (4'),
caractérisé en ce que
la couche adhésive (2, 2') est un gel de silicone vulcanisé en gel, constitué d'un caoutchouc de silicone à deux composants.

2. Miroir selon la revendication 1,
caractérisé en ce que
l'embase de miroir est faite essentiellement d'un matériau thermodurcissable ou de préférence d'un matériau thermoplastique conducteur de l'électricité.

3. Miroir selon la revendication 2,
caractérisé en ce que
l'embase de miroir (1, 1') est fabriquée essentiellement en sulfure de polyphényle (PPS).

4. Miroir selon une des revendications 1 à 3,
caractérisé en ce que
l'embase de miroir (1, 1') peut être chauffée par un dispositif de chauffage par conduction de préférence.

5. Miroir selon une des revendications 1 à 4,
caractérisé en ce que
la couche réfléchissante (5) est déposée sur la face arrière, tournée vers l'observateur du miroir (3), de la couche de protection (4) et cette face arrière forme une surface optique, polie par exemple.

6. Miroir selon une des revendications 1 à 4,
caractérisé en ce que
la couche adhésive (2') en gel de silicone est placée entre la couche réfléchissante (5') et la couche de protection (4') résistant aux rayures, tandis qu'une couche électriquement isolante (6) se trouve entre l'embase (1') et la couche réfléchissante (5').

7. Miroir selon la revendication 6,
caractérisé en ce que
la couche électriquement isolante (6) est un plan de vernis ou une autre couche adhésive essentiellement constituée d'un gel de silicone.

8. Miroir selon l'une des revendications 1 à 7,
caractérisé en ce que
la couche réfléchissante (5, 5') est essentiellement en Cr, en Al ou en TiO₂.

9. Miroir selon une des revendications 1 à 8,
caractérisé en ce que
la couche de protection (4) résistant aux rayures est une couche transparente faite d'un matériau anorganique, par exemple un verre mince ou une pellicule de verre mince, ou faite d'un matériau organique, par exemple une pellicule de vernis ou de matière plastique garnie d'un revêtement résistant aux rayures.
